# EUROPEAN PATENT APPLICATION

(11) **EP 2 110 691 A2**
(43) Date of publication of application: **21.10.2009**
(21) Application number: 09157936.7
(22) Date of filing: 15.04.2009
(51) Int. Cl.: G02B 5/18, G02B 27/00, G02B 27/44, F21V 5/02

(54) **Light distribution board having gratings with multiple focuses**

(30) Priority: 18.04.2008 TW 97114175; 01.08.2008 TW 97129331
(71) Applicant: Taiwan Network Computer & Electronic Co., Ltd., Lu-Chou Taipei Hsien 247 (TW)
(72) Inventor: Chuang, Ping-Han, 247, Taipai Hsien (TW)
(74) Representative: Zipse Habersack Kritzenberger

(57) **Abstract**

A light distribution board having a plurality of light gratings each with multiple focuses, the light distribution board is used on a light outputting surface of a lamp, in which at least a transparent board is provided on at least one of its surfaces with a plurality of light gratings each having multiple focuses, each light grating having multiple focuses is composed of two or more mutually integratedly juxtaposed arciform (concave or convex) lenses to form a convex lens grating having two or more focuses. With this structure, light beams can be uniformly distributed and can avoid the phenomenon of Gauss distribution that makes the area below the lamp especially bright, and can avoid the phenomenon of dazzling of eyes during looking at the light emitting member in the lamp; and except the light beams directly under the lamp, other light beams around the lamp are completely obscured, thus an effect of no optical pollution can be obtained.

## Description

### BACKGROUND OF THE INVENTION

### 1. Field of the Invention

The present invention relates to a light distribution board having a plurality of light gratings each with multiple focuses; and especially to a light distribution board that can illuminate a district with uniform brightness, tender light beams which are non dazzling under the condition of minimum lose of brightness of a lamp; the light distribution board is suitable applied to a place such as a house, an office, a factory or a road requiring illumination, and can achieve an effect of saving energy as well as avoiding the phenomenon of optical pollution.

### 2. Description of the prior art

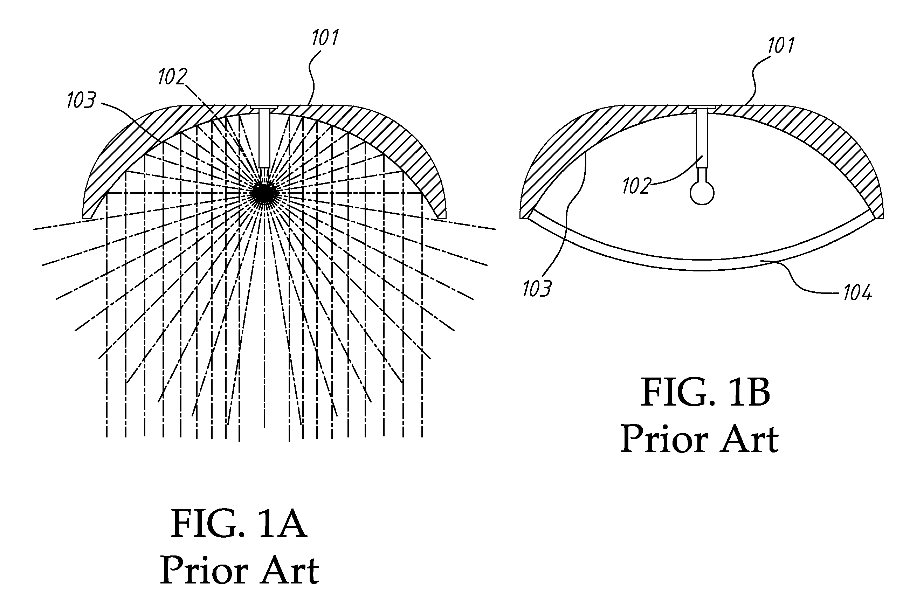

Illuminating lamps generally are divided in to two kinds including indoor and outdoor lamps; indoor lamps mainly are installed each with a half covering type obscured cover 101 (referring to Fig. 1A) having on an inner side thereof a reflective surface 103; the light beams of the lamp include, in addition to those directly irradiated from the lamp (light source), quite a large part of light beams being directly reflected from the reflective surface 103 and out of the lamp to a district to be illuminated. These lamps normally are treated by fogging process on the surface of the light source to avoid irradiating of light to eyes to result a phenomenon of making them feel dazzling and dizzy.

The outdoor lamps are mainly fully covering type covers (referring to Figs. 1B) in considering the factor of environment, it is mounted therebeneath with a transparent hood 104, the hood 104 is also treated by fogging process to avoid the phenomenon of dazzling of eyes during looking at the light source directly. The aforesaid two types have a common defect of losing much brightness by treatment by fogging process, these kinds of conventional lamps generally have the phenomenon of Gauss distribution that brightness of lamps are concentrated at an area exactly below each lamp.

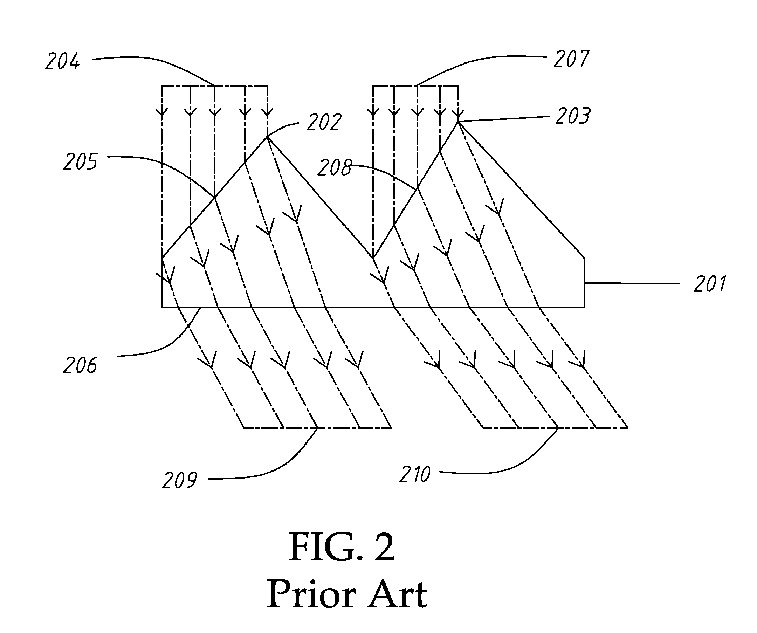

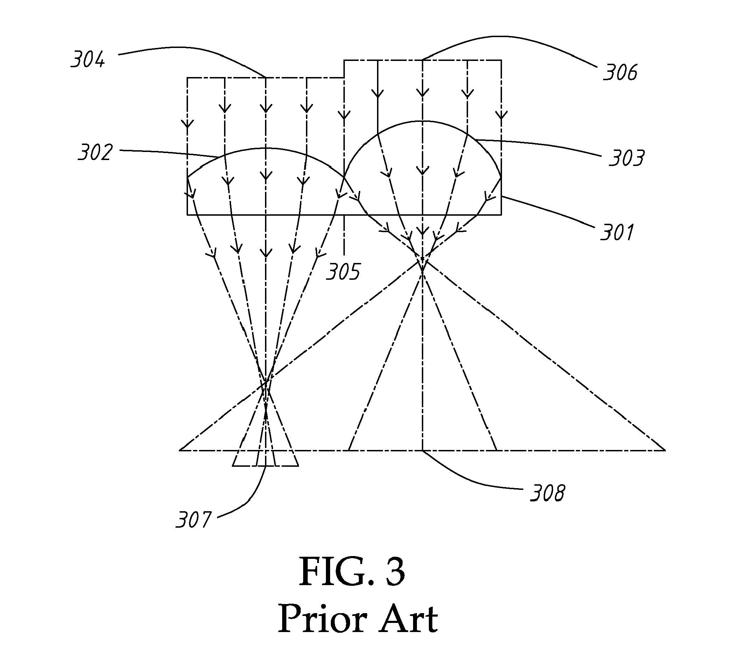

Light grating boards available presently we know include rhombic gratings and convex lens type gratings, these are shown respectively in Figs. 2 and 3.

Referring to Fig. 2 depicting a conventional rhombic grating unit 201 of which the structure is more similar to that of the present invention, the rhombic grating unit 201 has a plane bottom surface 206, and a top surface having a plurality of saw toothed gratings 202, 203, the rhombic grating 201 is shaped from two straight bevel edges 205, 208 being oppositely disposed as mirror images for each other; several incident light beams 204 enter a bevel edge 205 of the saw toothed grating 202 in an identical incident angular direction to result a first time refraction, when the light beams 204 reach the plane surface 206, they are once more refracted toward a district 209 to be illuminated; similarly, several incident light beams 207 enter a bevel edge 208 of the saw toothed grating 203 in an identical incident angular direction to result a first time refraction, when the light beams 207 reach the plane surface 206, they are once more refracted toward a district 210 to be illuminated. We can see from the drawing that the light beams after being refracted from those incident light beams in an identical incident angular direction to the bevel edges 205, 208 or the plane surface 206 are always parallel to one another, i.e., there is no crossing and diffusing effect, the light beams arriving at the districts to be illuminated form partial gathering light beams, and they are unable to get an effect of uniformly distributing.

Referring to Fig. 3 which is depicted another conventional convex lens grating unit 301 of which the structure is also more similar to that of the present invention, the convex lens grating unit 301 has a plane bottom surface 305, and a top surface having a plurality of convex lens gratings 302, 303, the convex lens grating unit 301 is composed of the two convex lens gratings 302, 303 of different curvatures. Several incident light beams 304 enter the convex lens 302 in an identical incident angular direction to result a first time refraction, when the light beams 304 reach the plane surface 305, they are once more refracted toward a district 307 to be illuminated; similarly, several incident light beams 306 enter the convex lens grating 303 in an identical incident angular direction to result a first time refraction, when the light beams 306 reach the plane surface 305, they are once more refracted toward a district 308 to be illuminated. We can see from the drawing that the light beams after being irradiated to the two convex lens gratings 302, 303 in an identical incident angular direction will create refractions in different angular directions, wherein the convex lens grating 302 of a smaller curvature has a longer focus, the light beams after being refracted from the convex lens grating 302 cross at the focus, they form a narrower illuminated range at the district 307; the other convex lens grating 303 of a larger curvature has a shorter focus, the light beams after being refracted from the convex lens grating 303 cross at the focus, they form a wider illuminated range at the district 308.

If the convex lens grating unit 301 is applied to a place for light distribution, at least two defects as list below will be induced: firstly, all light beams will gather at an area exactly below the convex lens grating unit 301, their distance of irradiation is short and they are unable to get an effect of having a wide illuminated range; and secondly, the light beams are highly overlapped with one another and are subjected to resulting the phenomenon of Gauss distribution, and are unable to get an effect of uniformly distributing.

In view of the above, the transparent hood 104 is unable to get an effect of the desired light distribution by using a conventional light grating.

### SUMMARY OF THE INVENTION

In order to get rid of the defects of the conventional lamps, the present invention provided a light distribution board having a plurality of light gratings each with multiple focuses, the light distribution board can be mounted at a light outputting surface of a conventional lamp to control the refraction angular directions of most of the light beams of the lamp, so that the light beams can irradiate a predetermined district to be illuminated to get an effect of uniformly distributing. At least a transparent board is provided on its top surface with a plurality of light gratings each having multiple focuses, each light grating having multiple focuses is composed of two or more mutually integratedly juxtaposed arciform (concave or convex) lenses to form a light grating having two or more focuses; these light gratings with multiple focuses are strip like light gratings; the top surface is a light receiving surface of the lamp. The bottom surface of the transparent board can be a plane surface, an arciform surface or a surface formed thereon a plurality of normal convex lenses, and the bottom surface is an illuminating surface of the lamp. With such a structure, light beams can be uniformly distributed and can avoid the phenomenon of Gauss distribution that makes the area below the lamp especially bright, and can avoid the phenomenon of dazzling of eyes during looking at the light emitting member in the lamp, and the light beams become more tender under the condition that lose of brightness is minimum.

Moreover, the light distribution board provided in the present invention can be formed on a top surface of a transparent board a plurality of light gratings each having multiple focuses, each light grating having multiple focuses is composed of two or more mutually integratedly juxtaposed arciform (concave or convex) lenses to form a light grating having two or more focuses; these light gratings with multiple focuses are annular light gratings; the top surface is a light receiving surface of the lamp. The bottom surface of the transparent board can be a plane surface, an arciform surface or a surface formed thereon a plurality of normal convex lenses, and the bottom surface is an illuminating surface of the lamp.

Further, the light distribution board provided in the present invention can be formed on a top surface of a transparent board a plurality of light gratings each having multiple focuses, each light grating having multiple focuses is composed of two or more mutually integratedly juxtaposed convex lenses to form a light grating having two or more focuses; these light gratings with multiple focuses are light gratings in shapes of clouds; the top surface is a light receiving surface of the lamp. The bottom surface of the transparent board can be a plane surface, an arciform surface or a surface formed thereon a plurality of normal convex lenses, and the bottom surface is an illuminating surface of the lamp.

And more, the light distribution board provided in the present invention can be formed on a top surface of a transparent board a plurality of light gratings each having multiple focuses, each light grating having multiple focuses is composed of two or more mutually integratedly juxtaposed arciform (concave or convex) lenses to form a light grating having two or more focuses; these light gratings with multiple focuses are light gratings are granular being arranged in lines; the top surface is a light receiving surface of the lamp. The bottom surface of the transparent board can be a plane surface, an arciform surface or a surface formed thereon a plurality of normal convex lenses, and the bottom surface is an illuminating surface of the lamp.

And more, the light distribution board provided in the present invention can be formed on a top surface of a transparent board a plurality of light gratings each having multiple focuses, each light grating having multiple focuses is composed of two or more mutually integratedly juxtaposed arciform (concave or convex) lenses to form a light grating having two or more focuses; these light gratings with multiple focuses are light gratings in shapes of granules being arranged in annular shapes; the top surface is a light receiving surface of the lamp. The bottom surface of the transparent board can be a plane surface, an arciform surface or a surface formed thereon a plurality of normal convex lenses, and the bottom surface is an illuminating surface of the lamp.

And further more, the light distribution board provided in the present invention can be formed on a top surface of a transparent board a plurality of light gratings each having multiple focuses, each light grating having multiple focuses is composed of two or more mutually integratedly juxtaposed arciform (concave or convex) lenses to form a light grating having two or more focuses; these light gratings with multiple focuses are light gratings in shapes of granules mutually overlapping, being arranged in lines or in annular shapes; the top surface is a light receiving surface of the lamp. The bottom surface of the transparent board can be a plane surface, an arciform surface or a surface formed thereon a plurality of normal convex lenses, and the bottom surface is an illuminating surface of the lamp.

In a light distribution board provided in the present invention, curvature and inclination angle of each arciform (concave or convex) lens of a light grating having multiple focuses are changed in pursuance of the angles of refraction of the incident light beams through the arciform (concave or convex) lens surfaces. While curvature of every normal convex lens and the inter-lens distance between every two normal convex lenses are changed in pursuance of the angles of refraction of the incident light beams through the lens surfaces. Thereby light beams in a lamp can be refracted toward a small area of the district to be illuminated, thus light beams can be uniformly distributed and can avoid the phenomenon of Gauss distribution that makes the area below the lamp especially bright.

The light distribution board provided in the present invention can be further improved, namely, partial areas of the bottom surface of the transparent board can be formed a plurality of strip like or annularly arranged light gratings comprised of normal convex lenses; and partial areas can be formed a plurality of convex lens gratings with multiple focuses. With such a structure, a wider illuminated range can be provided, light beams can be uniformly distributed, the phenomenon of dazzling of eyes during looking at the light emitting member in the lamp and the phenomenon of optical pollution can be avoided.

The present invention will be apparent in its structure and principle after reading the detailed description of the preferred embodiment thereof in reference to the accompanying drawings.

### BRIEF DESCRIPTION OF THE DRAWINGS

Fig. 1A is a schematic sectional view of a conventional half covering type illumination lamp;
Fig. 1B is a schematic sectional view of a conventional fully covering type illumination lamp;
Fig. 2 is a schematic view showing the light beam progressing of a conventional rhombic grating structure;
Fig. 3 is a schematic view showing the light beam progressing of a conventional convex lens grating;
Fig. 4 is a side view showing a light grating having multiple focuses and composed of two mutually integratedly juxtaposed convex lenses forming the structure of a strip like, cloud shaped or annular light grating having multiple focuses of the light distribution board of the present invention;
Fig. 4A is a top view of the light grating of Fig. 4;
Fig. 5 is a side view showing a light grating having multiple focuses and composed of three mutually integratedly juxtaposed convex lenses forming the structure of a strip like, cloud shaped or annular light grating having multiple focuses of the light distribution board of the present invention;
Fig. 5A is a top view of the light grating of Fig. 5;
Fig. 6 is a side view showing a light grating having multiple focuses and composed of four mutually integratedly juxtaposed convex lenses forming the structure of a strip like, cloud shaped or annular light grating having multiple focuses of the light distribution board of the present invention;
Fig. 6A is a top view of the light grating of Fig. 6;
Fig. 7 is a side view showing a light grating having multiple focuses and composed of two mutually integratedly juxtaposed convex lenses forming a light grating having two focuses which is a granule shaped light grating having multiple focuses on the light distribution board of the present invention;
Fig. 7A is a top view of the light grating of Fig. 7;
Fig. 8 is a side view showing a light grating having multiple focuses and composed of three mutually integratedly juxtaposed convex lenses forming a light grating having three focuses which is a granule shaped light grating having multiple focuses on the light distribution board of the present invention;
Fig. 8A is a top view of the light grating of Fig. 8;
Fig. 9 is a side view showing a light grating having multiple focuses and composed of four mutually integratedly juxtaposed convex lenses forming a light grating having four focuses which is a granule shaped light grating having multiple focuses on the light distribution board of the present invention;
Fig. 9A is a top view of the light grating of Fig. 9;
Fig. 10 is an enlarged schematic view showing the structure of a plurality of light gratings having multiple focuses and respectively pointing out the focuses of a plurality of mutually integratedly juxtaposed convex lenses in partial sectional view of a light distribution board of the present invention;
Fig. 11 is a schematic view showing a design wherein a plurality of light gratings having multiple focuses of the structure of the present invention is to control irradiating of light beams to a predetermined district;
Figs. 12, 12A and 12B are plane views of a first embodiment of the present invention;
Figs. 13, 13A and 13B are plane views of a second embodiment of the present invention;
Figs. 14, 14A and 14B are plane views of a third embodiment of the present invention;
Figs. 15, 15A and 15B are plane views of a fourth embodiment of the present invention;
Figs. 16, 16A and 16B are plane views of a fifth embodiment of the present invention;
Figs. 17 and 17A are plane views of a sixth embodiment of the present invention;
Figs. 18 and 18A are plane views of a seventh embodiment of the present invention;
Figs. 19, 19A and 19B are plane views of an eighth embodiment of the present invention;
Figs. 20, 20A and 20B are plane views of a ninth embodiment of the present invention;
Figs. 21 and 21A are plane views of a tenth embodiment of the present invention;
Figs. 22 and 22A are plane views of an eleventh embodiment of the present invention;
Figs. 23 and 23A are plane views of a twelfth embodiment of the present invention;
Figs. 24 and 24A are plane views of a thirteenth embodiment of the present invention;
Figs. 25 and 25A are plane views of a fourteenth embodiment of the present invention;
Figs. 26 and 26A are plane views of a fifteenth embodiment of the present invention;
Figs. 27 and 27A are plane views of a sixteenth embodiment of the present invention;
Figs. 28 is a sectional view showing an embodiment of which at least a side of a transparent board of the present invention is used to form a light distribution board having a plurality of light gratings each with multiple focuses and is applied to a lamp;
Figs. 29 is a sectional view showing another embodiment of which at least a side of a transparent board of the present invention is used to form a light distribution board having a plurality of light gratings each with multiple focuses and is applied to a lamp;
Fig. 30 is a side view showing a light grating having multiple focuses and composed of two mutually integratedly juxtaposed concave lenses forming the structure of a strip like, cloud shaped or annular light grating having multiple focuses of the light distribution board of the present invention;
Fig. 30A is a top view of the light grating of Fig. 30;
Fig. 31 is a side view showing a light grating having multiple focuses and composed of three mutually integratedly juxtaposed concave lenses forming the structure of a strip like, cloud shaped or annular light grating having multiple focuses of the light distribution board of the present invention;
Fig. 31A is a top view of the light grating of Fig. 31;
Fig. 32 is a side view showing a light grating having multiple focuses and composed of four mutually integratedly juxtaposed concave lenses forming the structure of a strip like, cloud shaped or annular light grating having multiple focuses of the light distribution board of the present invention;
Fig. 32A is a top view of the light grating of Fig. 32;
Fig. 33 is a side view showing a light grating having multiple focuses and composed of two arciform (one convex and one convex concave) mutually integratedly juxtaposed lenses forming the structure of a strip like, cloud shaped or annular light grating having multiple focuses of the light distribution board of the present invention;
Fig. 33A is a top view of the light grating of Fig. 33;
Fig. 34 is a side view showing a light grating having multiple focuses and composed of three arciform (one convex and two concave) mutually integratedly juxtaposed lenses forming the structure of a strip like, cloud shaped or annular light grating having multiple focuses of the light distribution board of the present invention;
Fig. 34A is a top view of the light grating of Fig. 34;
Fig. 35 is a side view showing a light grating having multiple focuses and composed of four arciform (two convex and two concave) mutually integratedly juxtaposed lenses forming the structure of a strip like, cloud shaped or annular light grating having multiple focuses of the light distribution board of the present invention;
Fig. 35A is a top view of the light grating of Fig. 35.

### DETAILED DESCRIPTION OF THE PREFERRED EMBODIMENT

The present invention relates to a light distribution board having a plurality of light gratings each with multiple focuses, in which at least a transparent board is used to form the light distribution board as an illuminating cover for a lamp. The transparent board can be in the shape of rectangular, circle, elliptical or strange shape; the material for the transparent board can be transparent plastics, transparent glass or some other transparent material. The transparent board is formed on at least one side thereof a plurality of light gratings having multiple focuses in strip, annular, cloud or granular shape, each of the light gratings having multiple focuses is composed of two or more mutually integratedly juxtaposed arciform (concave or convex) lenses to form a convex lens grating having two or more focuses, curvature and inclination angle of each arciform (concave or convex) lens are changed in pursuance of the angles of refraction of the incident light beams through the convex lens surfaces.

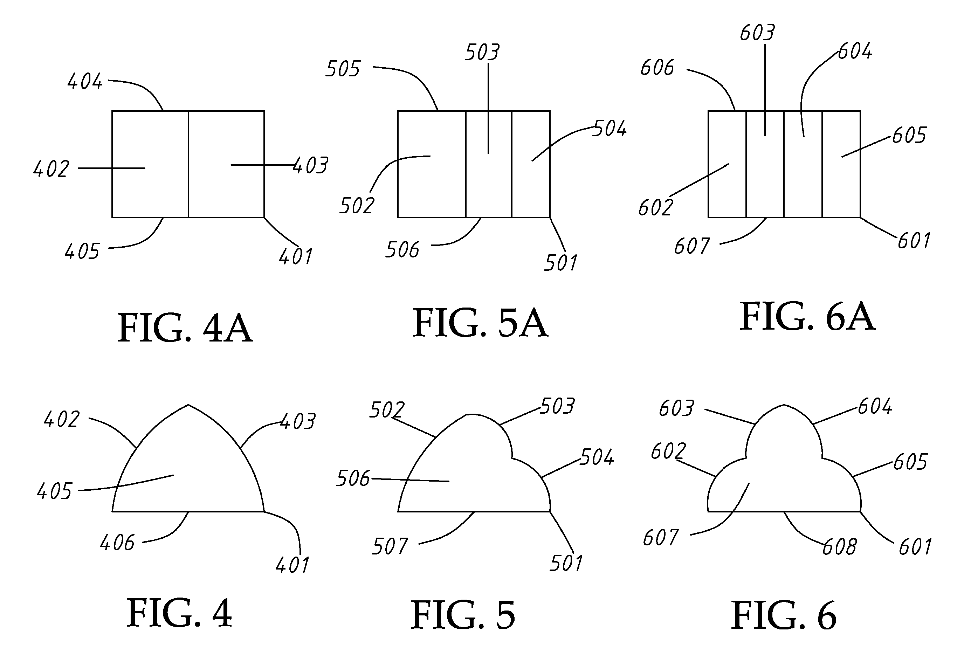

In the following embodiments, the light gratings having multiple focuses in strip, annular, cloud or granular shapes formed from the transparent boards of the present invention are chosen from the following various structures:
1. Referring to Figs. 4 and 4A, in the drawings, a light grating 401 having multiple focuses is composed of two mutually integratedly juxtaposed convex lenses 402 and 403, and there are two surfaces 404, 405 which are vertical surfaces of the front and the rear sides respectively of the light grating 401, and a bottom surface 406 of the light grating 401 having multiple focuses is a plane surface.
2. Referring to Figs. 5 and 5A, in the drawings, a light grating 501 having multiple focuses is composed of three mutually integratedly juxtaposed convex lenses 502, 503 and 504, and there are two surfaces 505 and 506 which are vertical surfaces of the front and the rear sides respectively of the light grating 501, and a bottom surface 507 of the light grating 501 having multiple focuses is a plane surface.
3. Referring to Figs. 6 and 6A, in the drawings, a light grating 601 having multiple focuses is composed of four mutually integratedly juxtaposed convex lenses 602, 603, 604 and 605, and there are two surfaces 606, 607 which are vertical surfaces of the front and the rear sides respectively of the light grating 601, and a bottom surface 608 of the light grating 501 having multiple focuses is a plane surface.

By virtue that there are many kinds of light grating structures composed of mutually integratedly juxtaposed convex lenses, here we summarily list the above three kinds of composed structures, generally speaking, a convex lens grating having two or more focuses and composed of two or more mutually integratedly juxtaposed arciform (concave or convex) lenses in strip, cloud, or annular shapes all fall in the range of the light gratings with multiple focuses formed from the transparent boards of the present invention.

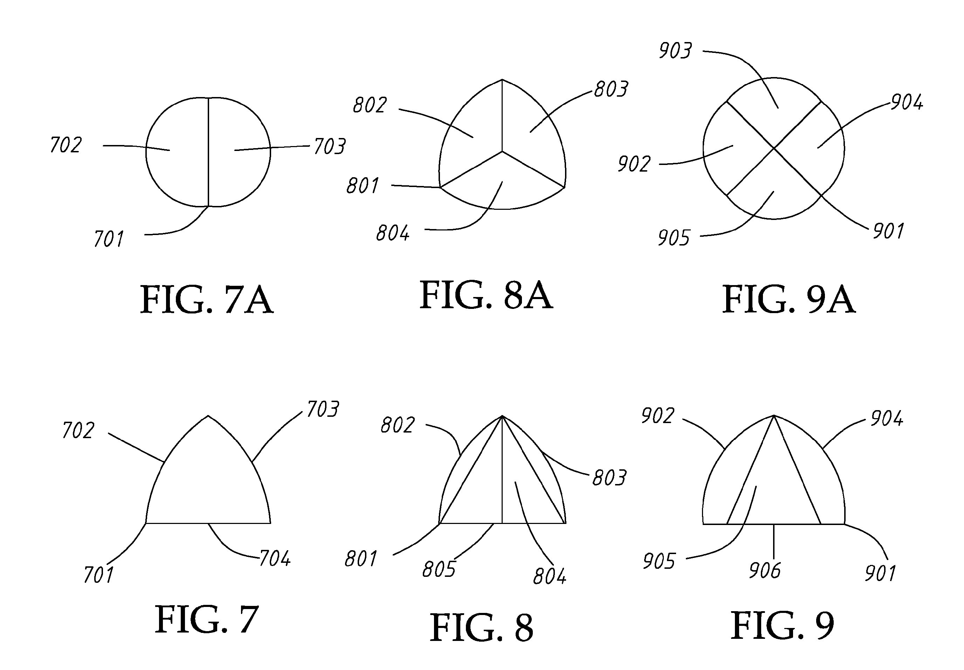

In the following embodiments, those structures of light gratings with multiple focuses formed from the transparent board of the present invention in shapes of granules are chosen from the followings:
1. Referring to Figs. 7 and 7A, in the drawings, a light grating 701 having multiple focuses is composed of two mutually integratedly juxtaposed convex lenses 702 and 703 to form a convex lens grating having two focuses, and a bottom surface 704 of the light grating 701 having multiple focuses is a plane surface.
2. Referring to Figs. 8 and 8A, in the drawings, a light grating 801 having multiple focuses is composed of three mutually integratedly juxtaposed convex lenses 802, 803 and 804 to form a convex lens grating having three focuses, and a bottom surface 805 of the light grating 801 having multiple focuses is a plane surface.
3. Referring to Figs. 9 and 9A, in the drawings, a light grating 901 having multiple focuses is composed of four mutually integratedly juxtaposed convex lenses 902, 903, 904 and 905 to form a convex lens grating having four focuses, and a bottom surface 906 of the light grating 901 having multiple focuses is a plane surface.

By virtue that there are many kinds of light grating structures composed of mutually integratedly juxtaposed convex lenses, here we summarily list the above three kinds of composed structures, generally speaking, a convex lens grating having two or more focuses and composed of two or more mutually integratedly juxtaposed convex lenses in granular shapes all fall in the range of the light gratings with multiple focuses formed from the transparent boards of the present invention.

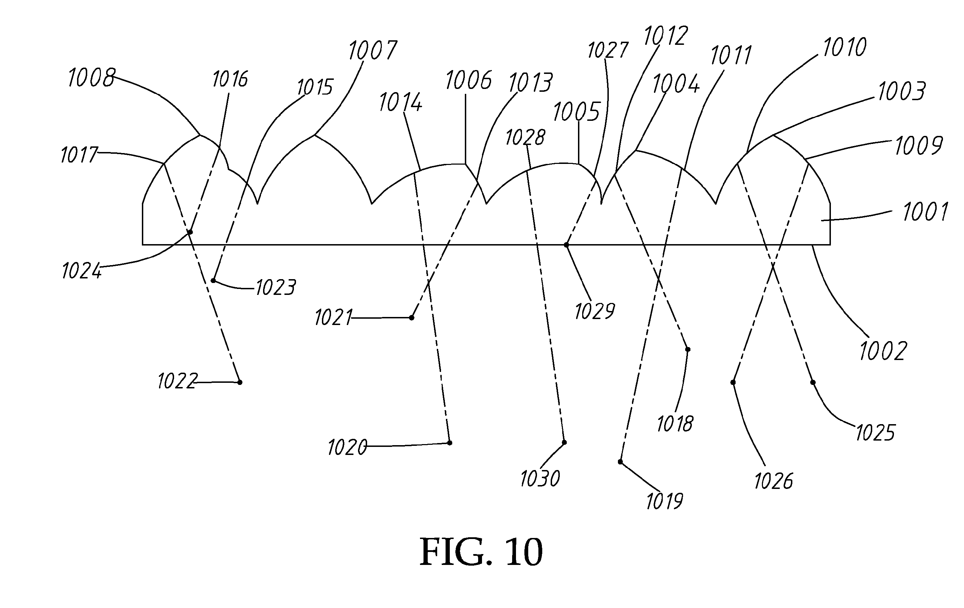

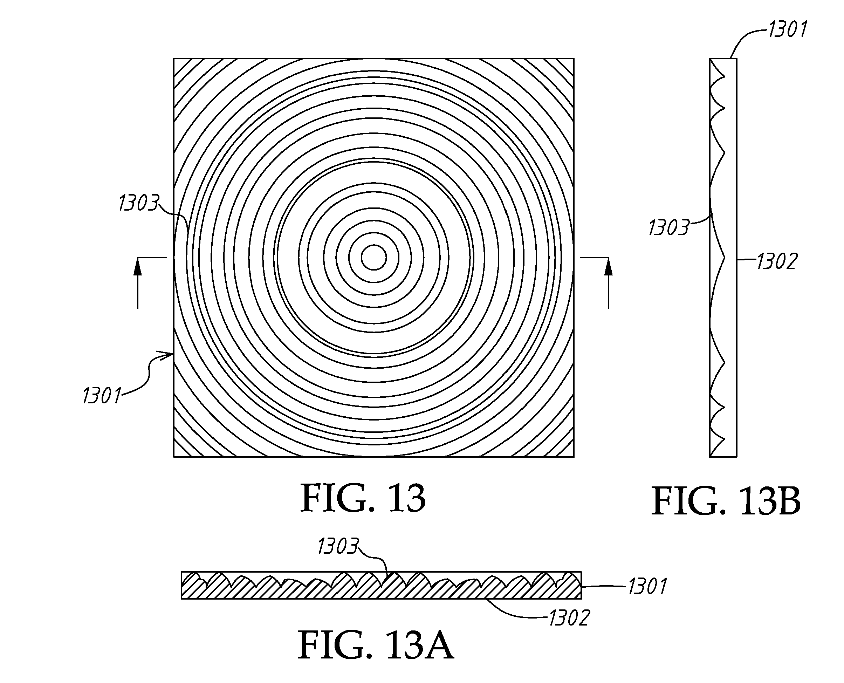

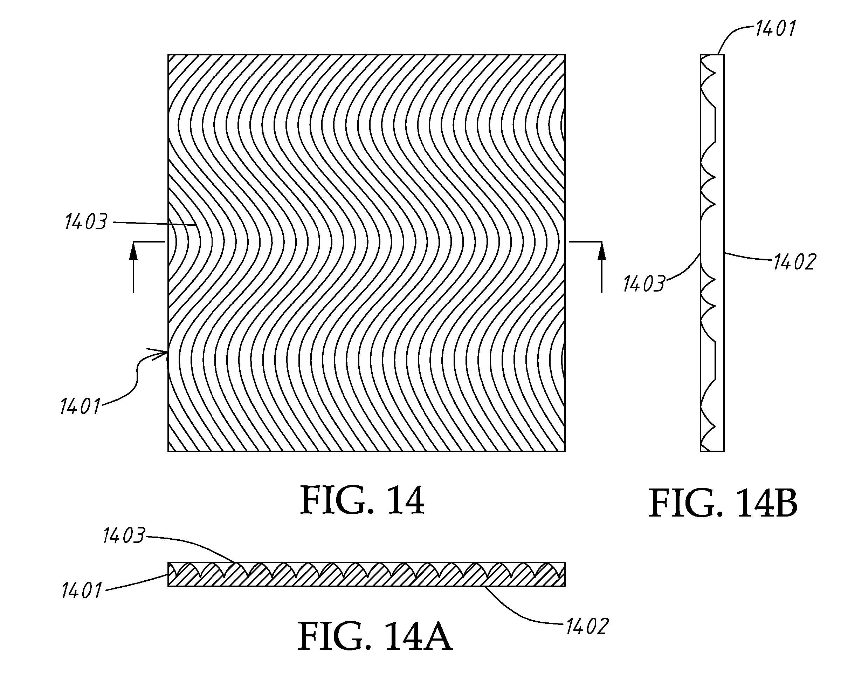

Referring to Fig. 10 which is an enlarged schematic view (such as of the embodiment shown in Fig. 13A or 14A) showing the structure of a plurality of light gratings having multiple focuses in partial sectional view of the present invention; in the drawings, the bottom surface 1002 of a transparent board 1001 is a plane surface, and the top surface of the transparent board 1001 is formed thereon a plurality of light gratings (having multiple focuses) 1003, 1004, 1005, 1006, 1007 and 1008, wherein the two light gratings 1003, 1007 having multiple focuses are respectively composed of two mutually integratedly juxtaposed convex lenses of same curvature and inclination angle; one convex lens 1009 of the light grating 1003 having multiple focuses has a focus 1026, the other convex lens 1010 of the light grating 1003 has a focus 1025; the light gratings 1004, 1006 are respectively composed of two mutually integratedly juxtaposed convex lenses of same curvature but different inclination angles; one convex lens 1011 of the light grating 1004 having multiple focuses has a focus 1019, the other convex lens 1012 of the light grating 1004 has a focus 1018; one convex lens 1013 of the light grating 1006 having multiple focuses has a focus 1021, the other convex lens 1014 of the light grating 1006 has a focus 1020; the light grating 1005 is composed of two mutually integratedly juxtaposed convex lenses of different curvatures, of which one convex lens 1016 has a focus 1024, the other convex lens 1015 has a focus 1023; the remaining convex lens 1017 has a focus 1022.

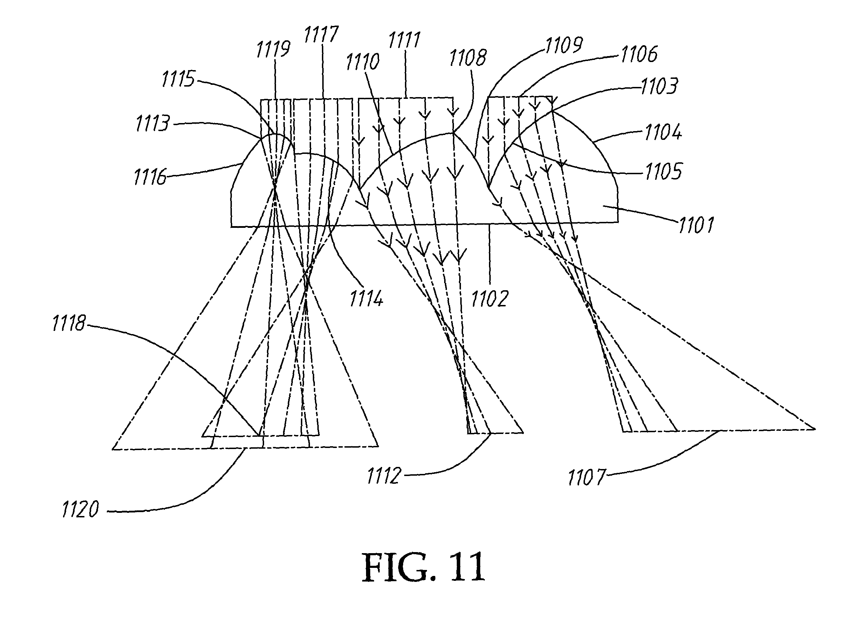

Referring to Fig. 11 which shows a design wherein a plurality of light gratings having multiple focuses of the structure of the present invention is in controlling irradiating of light beams to a predetermined district; in the drawings, the bottom surface 1102 of a transparent board 1101 is a plane surface, and the top surface of the transparent board 1101 is formed thereon a plurality of light gratings (having multiple focuses) 1103, 1108 and 1113, wherein the light grating having multiple focuses 1103 is composed of two mutually integratedly juxtaposed convex lenses 1104, 1105 of same curvature and inclination angle; when several light beams 1106 enter the convex lens 1105 of the light grating 1103 in an identical angular direction and create a first time refraction, and when the light beams 1106 reach the plane surface 1102, they are once more refracted down and rightwards toward a district 1107 to be illuminated; the light grating 1108 is composed of two mutually integratedly juxtaposed convex lenses 1109, 1110 of same curvature but different inclination angles; when several light beams 1111 enter the convex lens 1110 of the light grating 1108 in an identical angular direction and create a first time refraction, and when the light beams 1111 reach the plane surface 1102, they are once more refracted down and rightwards toward a district 1112 to be illuminated; the light grating 1113 is composed of three mutually integratedly juxtaposed convex lenses 1114, 1115 and 1116 of different curvatures; when several light beams 1117 enter the convex lens 1114 of the light gratings 1113 in an identical angular direction and create a first time refraction, and when the light beams 1111 reach the plane surface 1102, they are once more refracted down and leftwards toward a district 1118 to be illuminated; when several light beams 1119 enter the convex lens 1115 of the light gratings 1113 in an identical angular direction and create a first time refraction, and when the light beams 1119 reach the plane surface 1102, they are once more refracted down and leftwards toward a district 1120 to be illuminated.

We can see from the drawing that the light beams after being irradiated to the two convex lenses 1105, 1110 of same curvature but different inclination angles will create refractions in quite different angular directions; wherein the convex lens 1105 has a larger inclination angle, it will render the incident light beams to go in a larger angle of refraction down and rightwards of a lamp, and controls irradiating of the light beams to a district farer from and under the lamp, this creates an effect of having a wider range of illumination; the convex lens 1110 has a smaller inclination angle, it will render the incident light beams to go in a smaller angle of refraction down and rightwards of a lamp, and controls irradiating of the light beams to a district nearer from and under the lamp, this creates an effect of having a narrower range of illumination.

We can also see from the drawing that the light beams after being irradiated to the two convex lenses 1114, 1115 of different curvatures will result quite different ranges of illumination; wherein the convex lens 1115 has a larger curvature, it will render the incident light beams to induce crossing effect at a focus with a shorter distance, and controls irradiating of the light beams to a district to create an effect of having a wider range of illumination; the convex lens 1114 has a smaller curvature as comparing with the convex lens 1115, it will render the incident light beams to induce crossing effect at a focus with a longer distance, and controls irradiating of the light beams to a district to create an effect of having a narrower range of illumination.

We can see from the above stated that, when the curvature and tilting angle of each convex lens of a plurality of light gratings having multiple focuses are suitably controlled, the effects of having a wider illuminated range and uniform distribution of light beams at the district to be illuminated can be obtained. And we can know thereby, the present invention can have better distribution of light beams than the conventional case using the rhombic grating unit 201 in Fig. 2 and the convex lens grating unit 301 in Fig. 3.

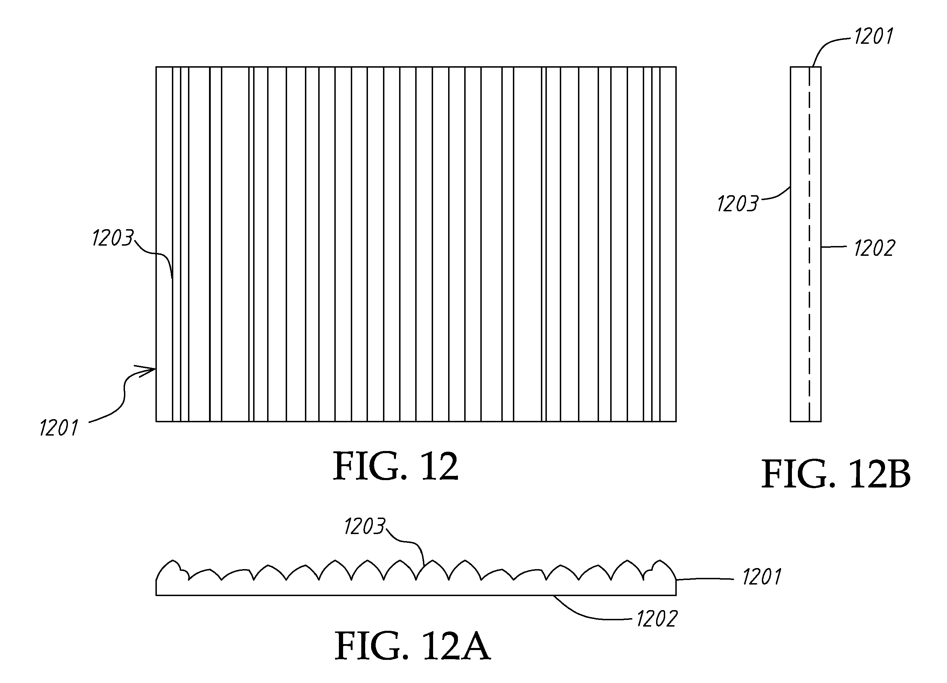

The followings are multiple examples for describing the light distribution boards of the present invention:
Referring to Figs. 12, 12A and 12B which are plane views of a first embodiment of light distribution board of the present invention, in the drawings, a bottom surface 1202 of a transparent board 1201 is a plane surface, and a top surface of the transparent board 1201 is formed thereon a plurality of strip like light gratings 1203 each having multiple focuses. These strip like light gratings 1203 having multiple focuses form the light grating structure same as that shown in Fig. 10, the principle of designing the curvature and tilting angle of each convex lens of the light gratings having multiple focuses is same as that stated for Fig. 11.

Referring to Figs. 13, 13A and 13B which are plane views of a second embodiment of light distribution board of the present invention, in the drawings, a bottom surface 1302 of a transparent board 1301 is a plane surface, and a top surface of the transparent board 1301 is formed thereon a plurality of annular light gratings 1303 having multiple focuses. These annular light gratings 1303 having multiple focuses form the light grating structure same as that shown in Fig. 10, the principle of designing the curvature and tilting angle of each convex lens of the light gratings having multiple focuses is same as that stated for Fig. 11.

Referring to Figs. 14, 14A and 14B which are plane views of a third embodiment of light distribution board of the present invention, in the drawings, a bottom surface 1402 of a transparent board 1401 is a plane surface, and a top surface of the transparent board 1401 is formed thereon a plurality of cloud shaped light gratings 1403 having multiple focuses. These cloud shaped light gratings 1403 having multiple focuses form the light grating structure same as that shown in Fig. 10, the principle of designing the curvature and tilting angle of each convex lens of the light gratings having multiple focuses is same as that stated for Fig. 11.

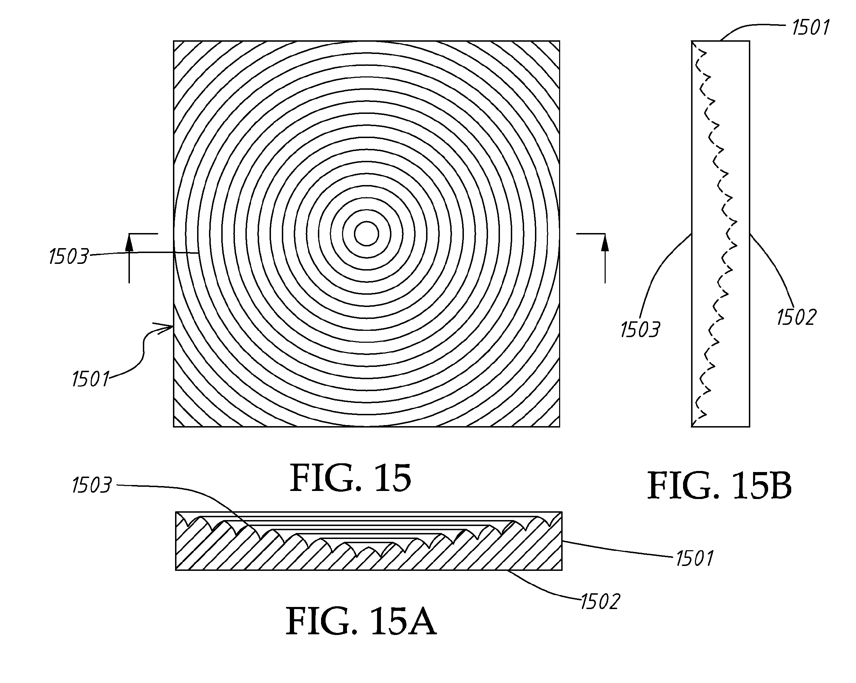

Referring to Figs. 15, 15A and 15B which are plane views of a fourth embodiment of light distribution board of the present invention, in the drawings, a bottom surface 1502 of a transparent board 1501 is a plane surface, and a top surface of the transparent board 1501 is formed thereon a plurality of annular light gratings 1503 having multiple focuses. These annular light gratings 1503 having multiple focuses are arranged in steps. And these annular light gratings 1503 having multiple focuses form the light grating structure same as that shown in Fig. 10, the principle of designing the curvature and tilting angle of each convex lens of the light gratings having multiple focuses is same as that stated for Fig. 11.

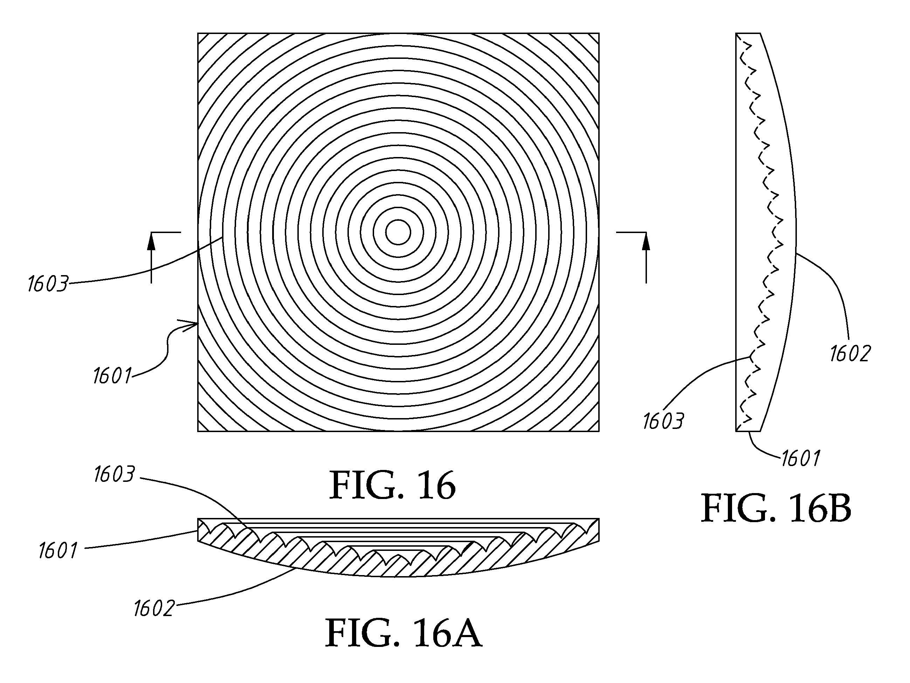

Referring to Figs. 16, 16A and 16B which are plane views of a fifth embodiment of light distribution board of the present invention, in the drawings, a bottom surface 1602 of a transparent board 1601 is an arciform surface, and a top surface of the transparent board 1601 is formed thereon a plurality of annular light gratings 1603 having multiple focuses. These annular light gratings 1603 having multiple focuses are arranged in steps. And these annular light gratings 1603 having multiple focuses form the light grating structure same as that shown in Fig. 10, the principle of designing the curvature and tilting angle of each convex lens of the light gratings having multiple focuses is same as that stated for Fig. 11.

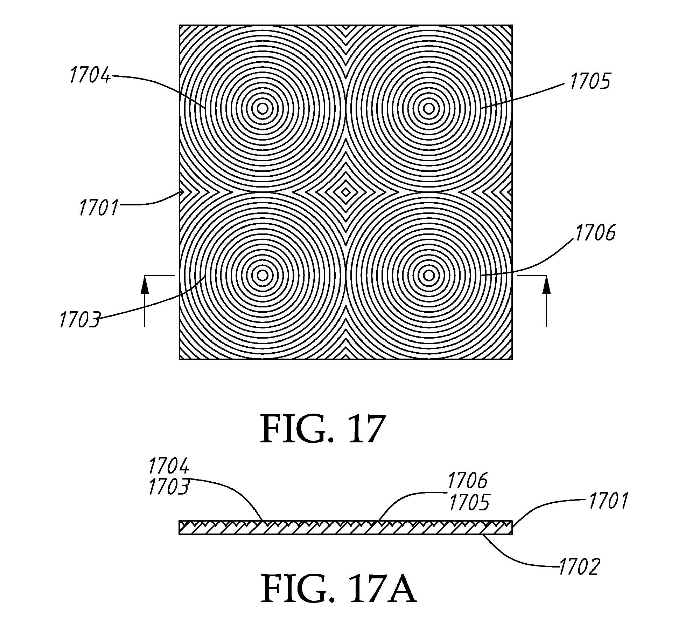

Referring to Figs. 17 and 17A which are plane views of a sixth embodiment of light distribution board of the present invention, in the drawings, a bottom surface 1702 of a transparent board 1701 is a plane surface, and a top surface of the transparent board 1701 is formed at a central area thereon a plurality of non-concentric annular light gratings 1703, 1704, 1705 and 1706 all having multiple focuses. These annular light gratings 1703, 1704, 1705 and 1706 having multiple focuses form the light grating structure same as that shown in Fig. 10, the principle of designing the curvature and tilting angle of each convex lens of the light gratings having multiple focuses is same as that stated for Fig. 11.

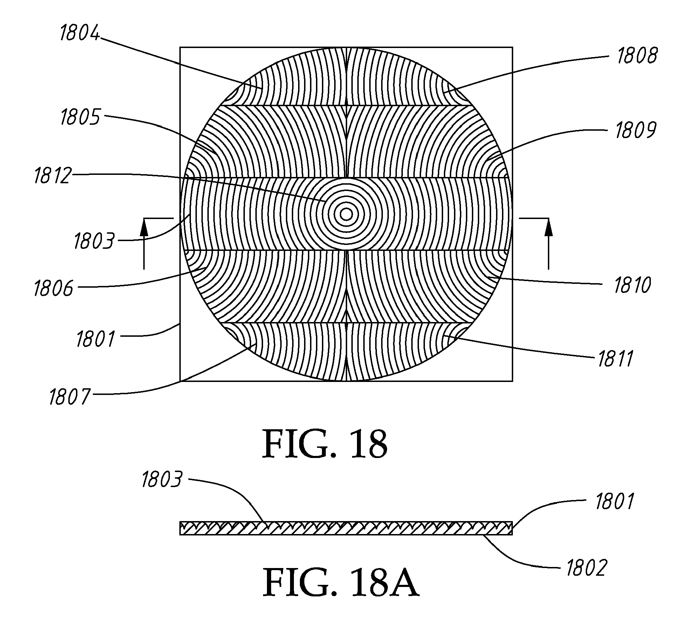

Referring to Figs. 18 and 18A which are plane views of a seventh embodiment of light distribution board of the present invention, in the drawings, a bottom surface 1802 of a transparent board 1801 is a plane surface, and a top surface of the transparent board 1801 is formed at a central area thereon a plurality of non-concentric annular light gratings 1812 and a plurality of partially annular light gratings 1803, 1804, 1805, 1806, 1807, 1808, 1809 and 1810 all having multiple focuses. These annular light gratings 1803, 1804, 1805, 1806, 1807, 1808, 1809 and 1810 having multiple focuses form the light grating structure same as that shown in Fig. 10, the principle of designing the curvature and tilting angle of each convex lens of the light gratings having multiple focuses is same as that stated for Fig. 11.

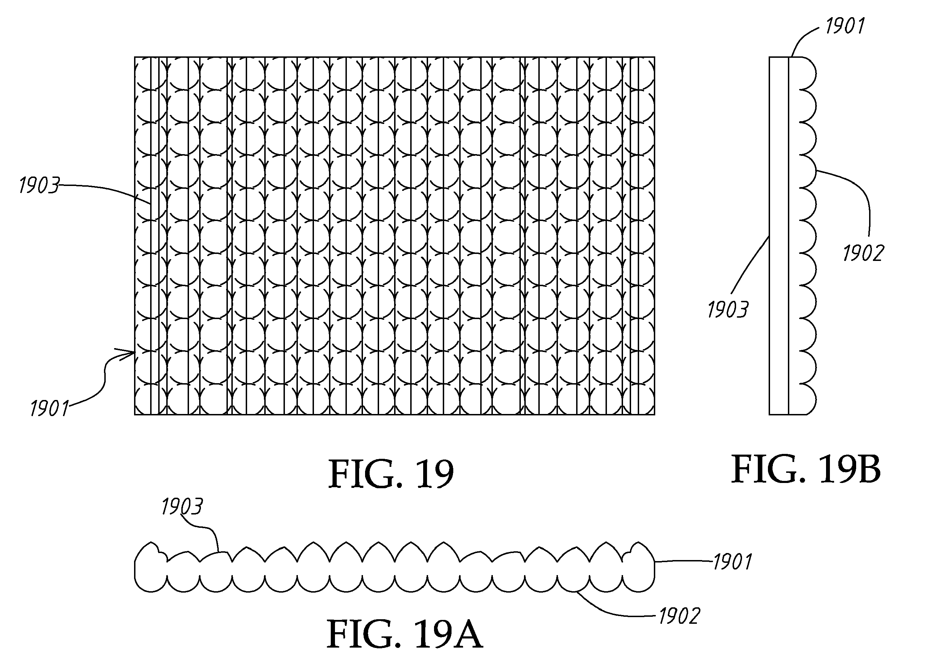

Referring to Figs. 19, 19A and 19B which are plane views of a eighth embodiment of light distribution board of the present invention, in the drawings, a bottom surface of a transparent board 1901 is formed thereon a plurality of normal convex lenses 1902, and a top surface of the transparent board 1901 is formed thereon a plurality of strip like light gratings 1903 having multiple focuses. These strip like light gratings 1903 having multiple focuses of the transparent board 1901 form the light grating structure same as that shown in Fig. 10, the principle of designing the curvature and tilting angle of each convex lens of the light gratings having multiple focuses is same as that stated for Fig. 11, the principle of designing the curvature of each of the convex lenses 1902 is same as that stated for Fig. 3.

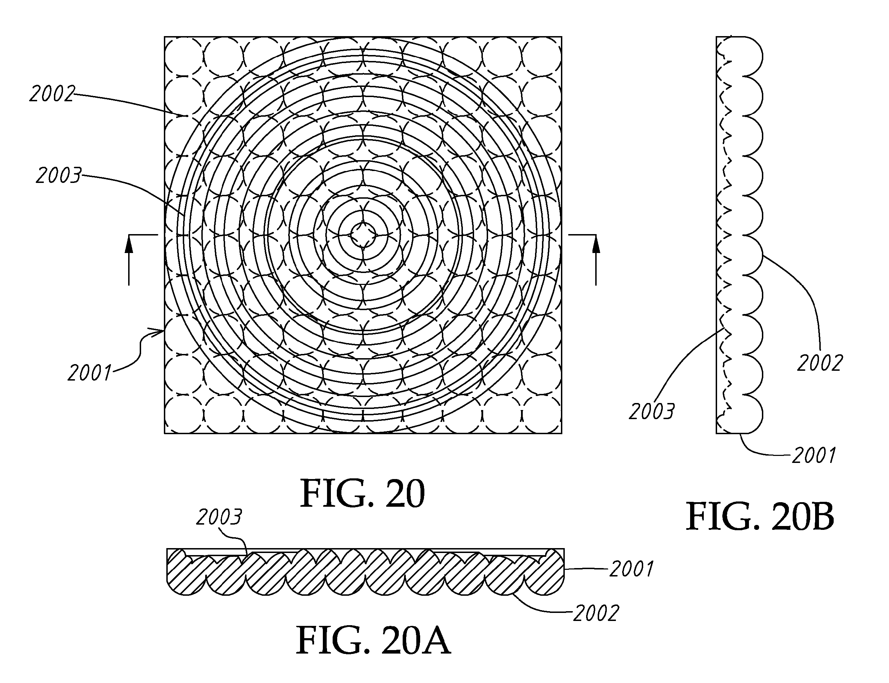

Referring to Figs. 20, 20A and 20B which are plane views of a ninth embodiment of light distribution board of the present invention, in the drawings, a bottom surface 1202 of a transparent board 2001 is formed thereon a plurality of normal convex lenses 2002, and a top surface of the transparent board 2001 is formed thereon a plurality of annular light gratings 2003 having multiple focuses. These annular light gratings 2003 having multiple focuses of the transparent board 2001 form the light grating structure same as that shown in Fig. 10, the principle of designing the curvature and tilting angle of each convex lens of the light gratings having multiple focuses is same as that stated for Fig. 11, the principle of designing the curvature of each of the normal convex lenses 2002 is same as that stated for Fig. 3.

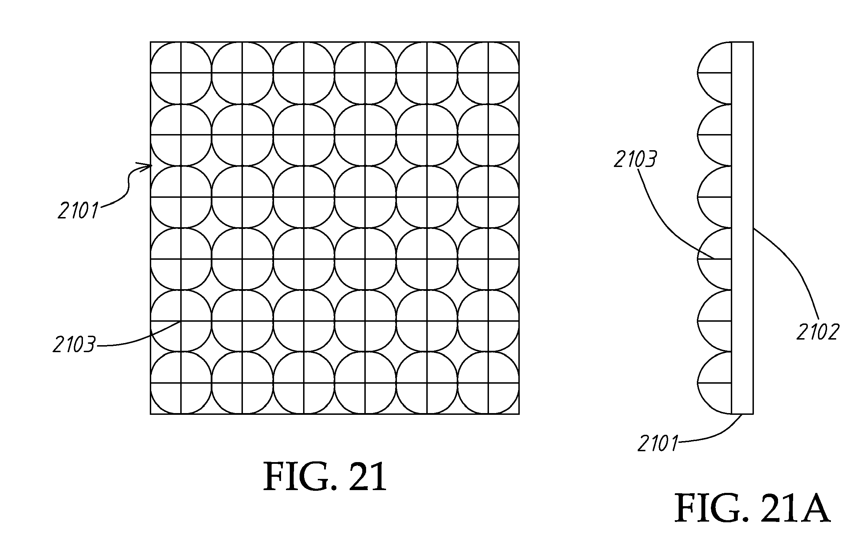

Referring to Figs. 21, and 21A which are plane views of a tenth embodiment of light distribution board of the present invention, in the drawings, a bottom surface 2102 of a transparent board 2101 is a plane surface, and a top surface of the transparent board 2101 is formed thereon a plurality of light gratings 2103 respectively with multiple granules each including a plurality of convex lenses and each having multiple focuses. These light gratings 2103 with granules having multiple focuses in this drawing are composed each of a plurality of convex lens groups respectively with four mutually integratedly juxtaposed convex lenses that form a light grating having four focuses being arranged in lines. The principle of designing the curvature and tilting angle of each convex lens of the granular light gratings having multiple focuses of the transparent board 2101 is same as that stated for Fig. 11.

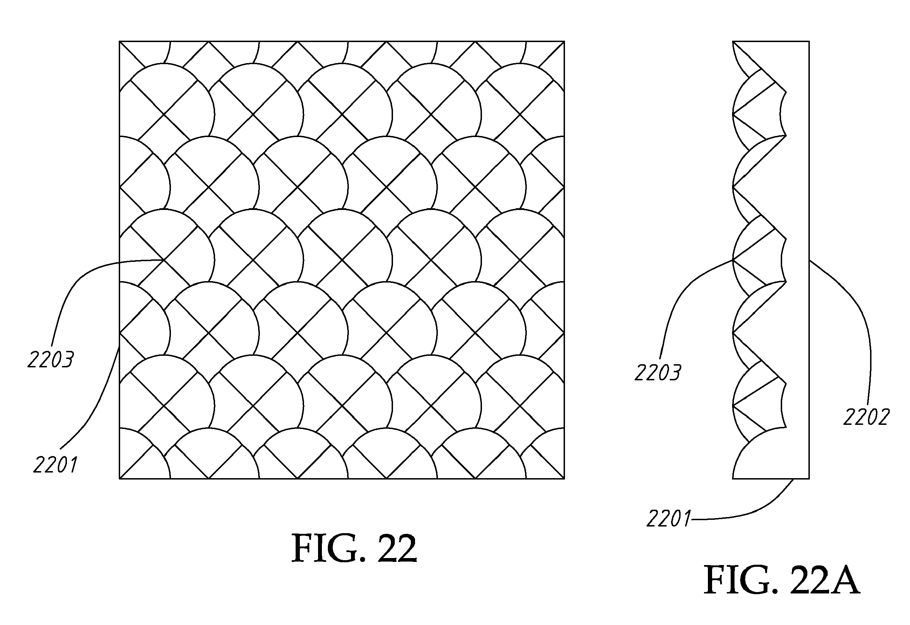

Referring to Figs. 22, and 22A which are plane views of an eleventh embodiment of light distribution board of the present invention, in the drawings, a bottom surface 2202 of a transparent board 2201 is a plane surface, and a top surface of the transparent board 2201 is formed thereon a plurality of granular light gratings 2203 respectively with multiple granules each including a plurality of convex lenses and each having multiple focuses. These light gratings 2203 with granules having multiple focuses in this drawing are composed each of a plurality of convex lens groups respectively with four mutually integratedly juxtaposed convex lenses that form a light grating having four focuses being arranged in lines and overlapped with one another. The principle of designing the curvature and tilting angle of each convex lens of the granular light gratings having multiple focuses of the transparent board 2201 is same as that stated for Fig. 11.

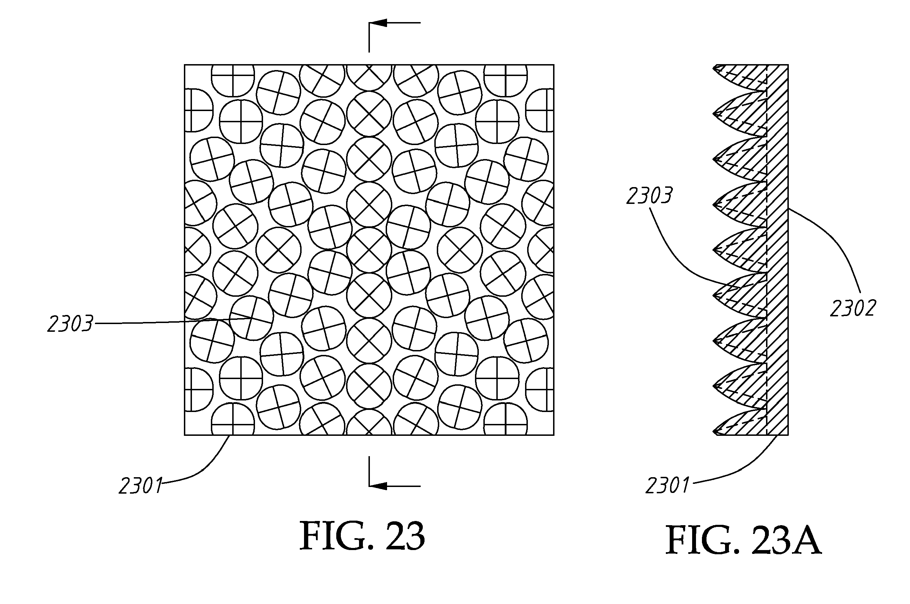

Referring to Figs. 23, and 23A which are plane views of a twelfth embodiment of light distribution board of the present invention, in the drawings, a bottom surface 2302 of a transparent board 2301 is a plane surface, and a top surface of the transparent board 2301 is formed thereon a plurality of granular light gratings 2303 respectively with multiple granules each including a plurality of convex lenses and each having multiple focuses. These light gratings 2303 with granules having multiple focuses in this drawing are composed each of a plurality of convex lens groups respectively with four mutually integratedly juxtaposed convex lenses that form a light grating having four focuses being arranged in annular shapes. The principle of designing the curvature and tilting angle of each convex lens of the granular light gratings having multiple focuses of the transparent board 2301 is same as that stated for Fig. 11.

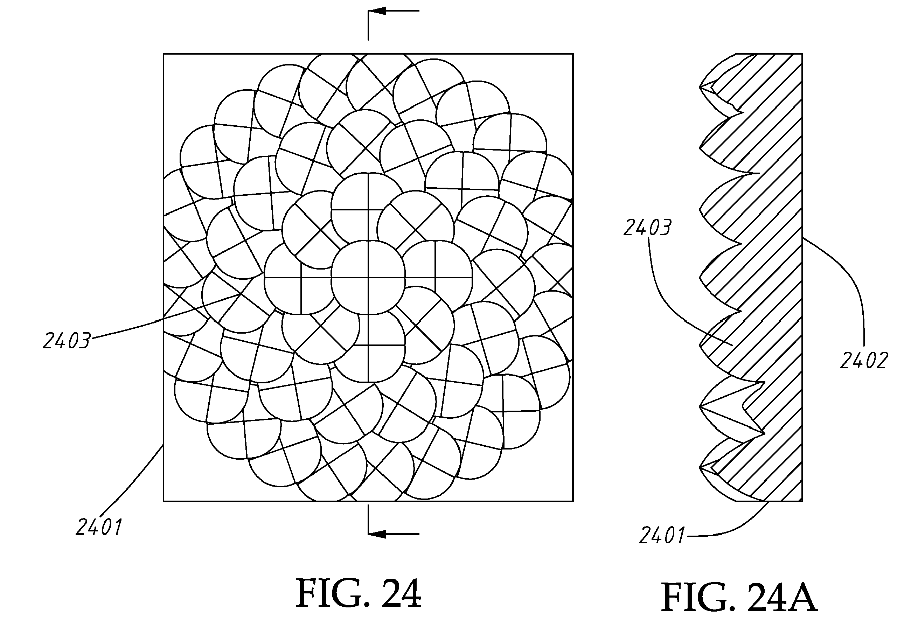

Referring to Figs. 24, and 24A which are plane views of a thirteenth embodiment of light distribution board of the present invention, in the drawings, a bottom surface 2402 of a transparent board 2401 is a plane surface, and a top surface of the transparent board 2401 is formed thereon a plurality of granular light gratings 2403 respectively with multiple granules each including a plurality of convex lenses and each having multiple focuses. These light gratings 2403 with granules having multiple focuses in this drawing are composed each of a plurality of convex lens groups respectively with four mutually integratedly juxtaposed convex lenses that form a light grating having four focuses being arranged in annular shapes and overlapped with one another. The principle of designing the curvature and tilting angle of each convex lens of the granular light gratings having multiple focuses of the transparent board 2401 is same as that stated for Fig. 11.

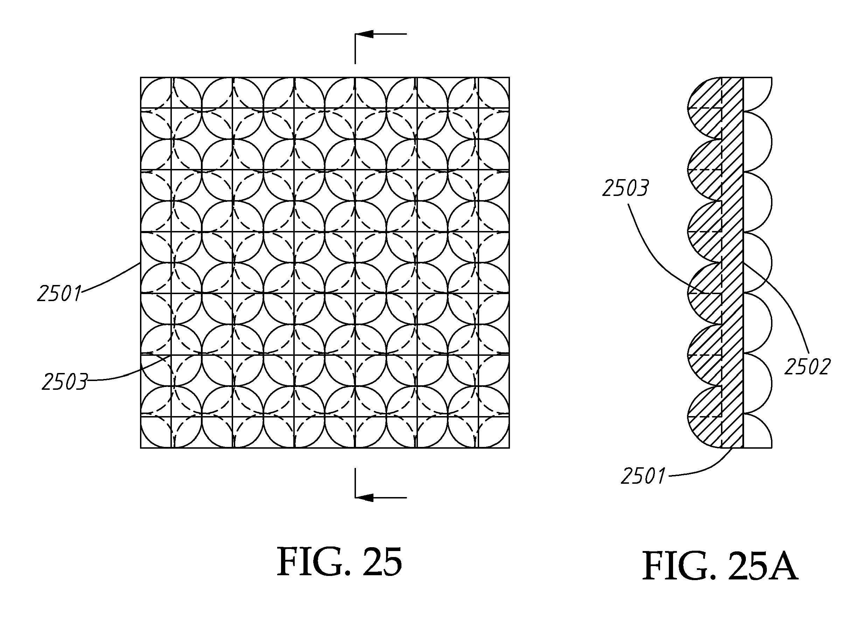

Referring to Figs. 25, and 25A which are plane views of a fourteenth embodiment of light distribution board of the present invention, in the drawings, a top surface of the transparent board 2501 is formed thereon a plurality of granular light gratings 2503 respectively with multiple granules each including a plurality of convex lenses and each having multiple focuses. These light gratings 2503 with granules having multiple focuses in this drawing are composed each of a plurality of convex lens groups respectively with four mutually integratedly juxtaposed lenses that form a light grating having four focuses being arranged in lines; and a bottom surface of the transparent board 2501 is formed thereon a plurality of normal convex lenses. The principle of designing the curvature and tilting angle of each convex lens of the granular light gratings having multiple focuses of the transparent board 2501 is same as that stated for Fig. 11, the principle of designing the curvature of each of the normal convex lenses is same as that stated for Fig. 3.

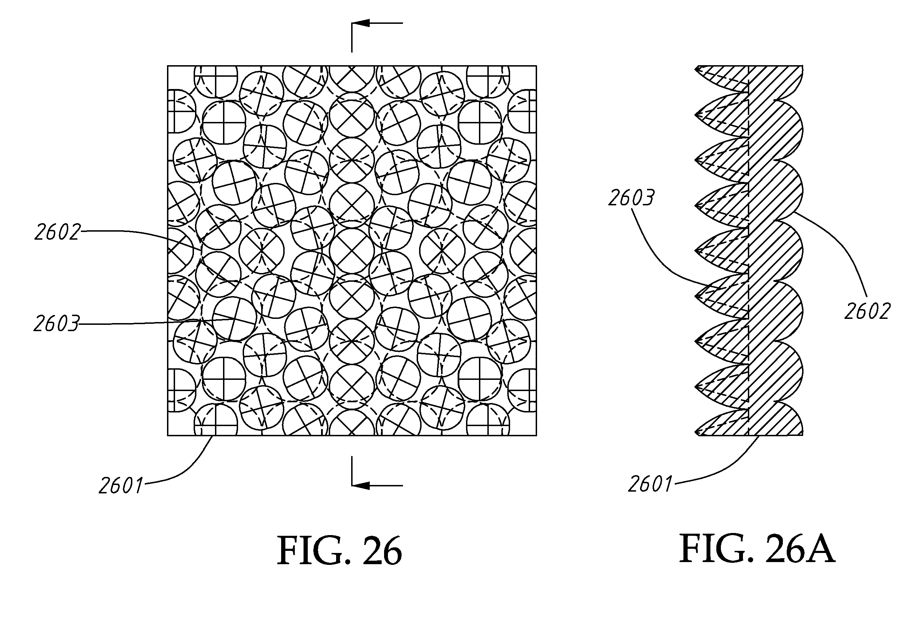

Referring to Figs. 26, and 26A which are plane views of a fifteenth embodiment of light distribution board of the present invention, in the drawings, a top surface of the transparent board 2601 is formed thereon a plurality of granular light gratings 2603 respectively with multiple granules each including a plurality of convex lenses and each having multiple focuses. These light gratings 2603 with granules having multiple focuses in this drawing are composed each of a plurality of convex lens groups respectively with four mutually integratedly juxtaposed convex lenses that form a light grating having four focuses being arranged in annular shapes; and a bottom surface of the transparent board 2601 is formed thereon a plurality of normal convex lenses. The principle of designing the curvature and tilting angle of each convex lens of the granular light gratings having multiple focuses of the transparent board 2601 is same as that stated for Fig. 11, the principle of designing the curvature of each of the normal convex lenses is same as that stated for Fig. 3.

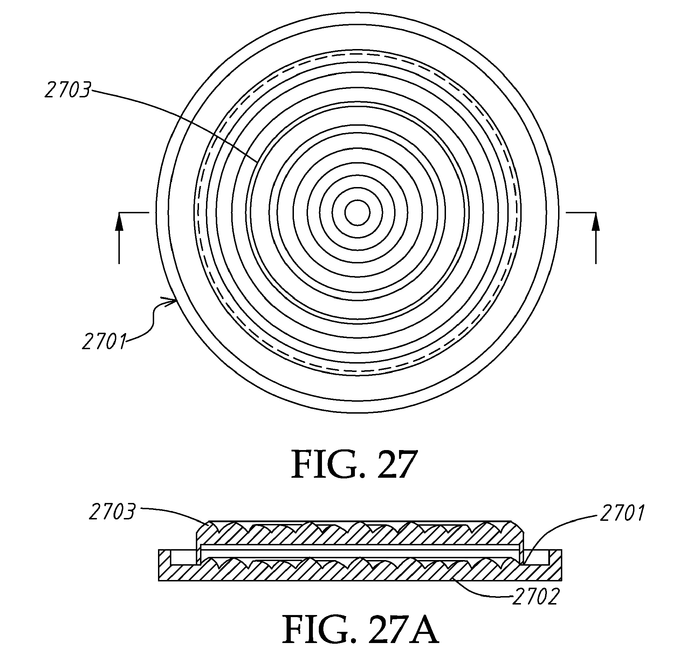

Referring to Figs. 27, and 27A which are plane views of a sixteenth embodiment of light distribution board of the present invention, in the drawings, a top surface of a double-layer light distribution board 2701 is composed of two transparent boards 2702, 2703, each of the two transparent boards 2702, 2703 can belong to any of the above fifteen kinds of embodiments of light distribution boards and can be overlapped with each other. In the drawings, the two transparent boards as shown here are both the transparent boards for the annular light gratings having multiple focuses as stated in the second embodiment, with such a structure, light beams can get maximum angles of refraction after many times of refraction.

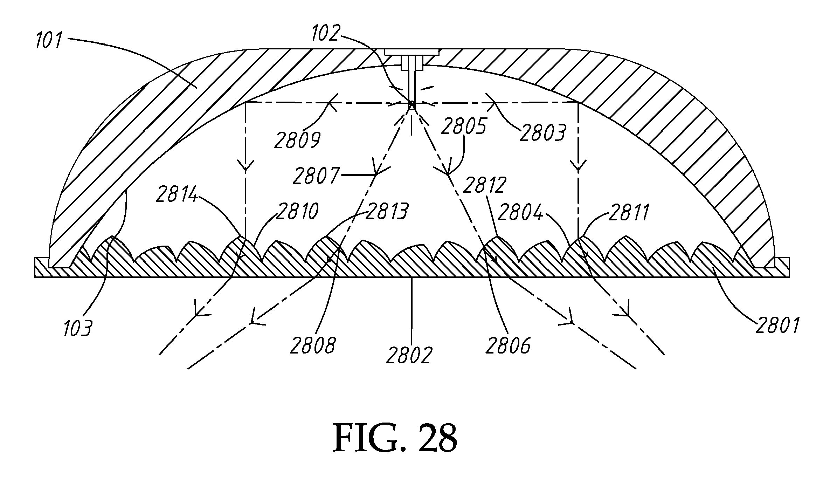

Referring to Fig. 28 which shows an embodiment of which at least a side of a transparent board of the present invention is used to form a light distribution board with a plurality of light gratings having multiple focuses and is applied to a lamp, in which a light distribution board randomly chosen from any of the above first to fifteenth embodiments is movably mounted at a district to be illuminated below the conventional half covering type obscured cover 101; in this drawing, a light distribution board 2801 as that of the second embodiment of the present invention is used for an example, a top surface of the light distribution board 2801 is formed thereon a plurality of annular light gratings having multiple focuses and faces to a light source 102 to be a light receiving surface, a bottom surface 2802 of the light distribution board 2801 is a plane surface as a light outputting surface.

When light beams 2805 enter a convex lens 2806 of the light grating 2812 of the light distribution board 2801 to create a first time refraction, and when the light beams 2805 reach the plane surface 2802, they are once more refracted down and rightwards toward a district to be illuminated. A light beam 2807 enters a convex lens 2808 of a light grating 2813 of the light distribution board 2801 to create a first time refraction, and when the light beam 2807 reaches the plane surface 2802, it is once more refracted down and leftwards and enters the district to be illuminated. A light beam 2809 enters a convex lens 2810 of a light grating 2814 of the light distribution board 2801 after being reflected by a reflective surface 103 to create a first time refraction, and when the light beam 2809 reaches the plane surface 2802, it is once more refracted down and leftwards and enters the district to be illuminated. A light beam 2803 enters a convex lens 2804 of a light grating 2811 of the light distribution board 2801 after being reflected by the reflective surface 103 to create a first time refraction, and when the light beam 2803 reaches the plane surface 2802, it is once more refracted down and rightwards and enters the district to be illuminated. The light distribution board 2801 surely can control illumination of a specific district to be illuminated by most of the light beams from a lamp, and the effects of having a wider illuminated range and uniform distribution of brightness of light beams at the district to be illuminated can thus be obtained.

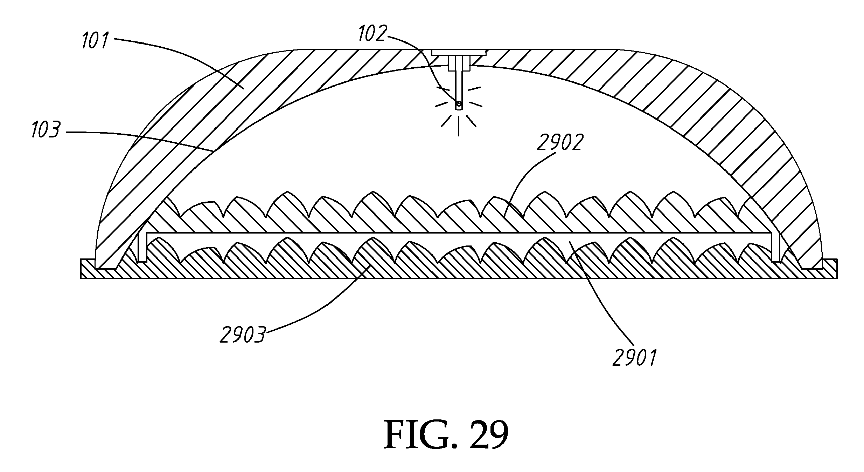

Referring to Fig. 29 which shows another embodiment of which at least a side of a transparent board of the present invention is used to form a light distribution board with a plurality of light gratings having multiple focuses and is applied to a lamp, in which a light distribution board 2901 of the above sixteenth embodiment is movably mounted at a district to be illuminated below the conventional half covering type obscured cover 101; in this drawing, the light distribution board 2901 is formed from two transparent boards 2902, 2903 having a plurality of light gratings each with multiple focuses.

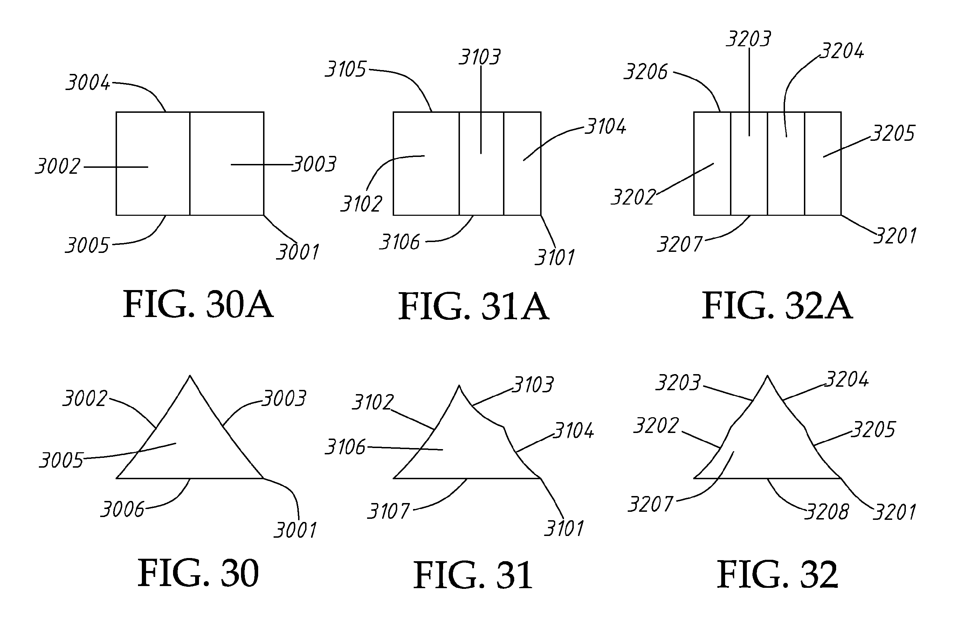

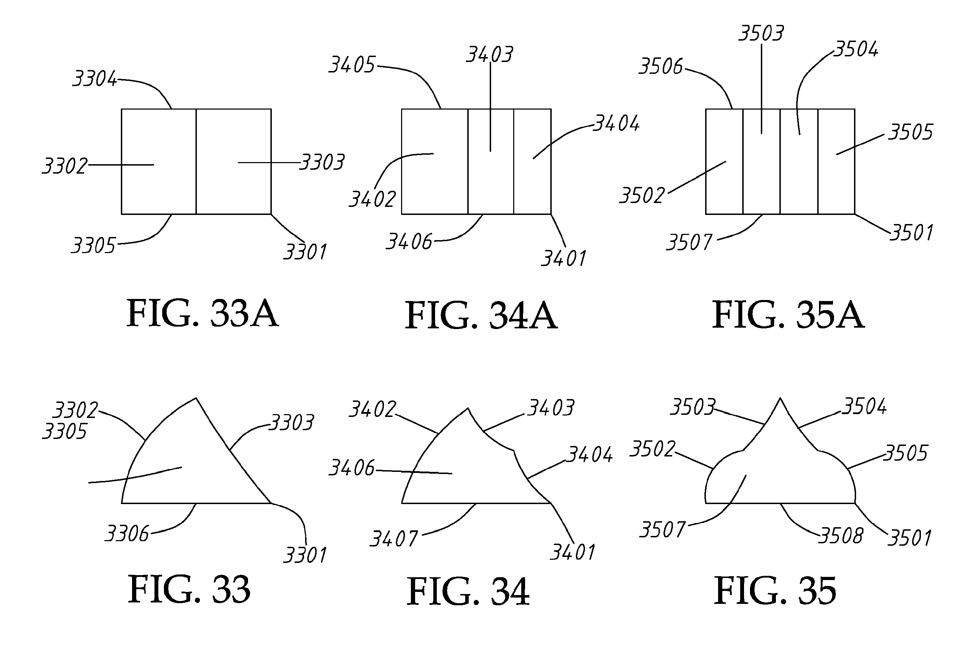

In the following embodiments, the light gratings having multiple focuses in strip, annular, cloud or granular shapes formed from the transparent boards of the present invention can also be chosen from the following various structures:
1. Referring to Figs. 30 and 30A, in the drawings, a light grating 3001 having multiple focuses is composed of two mutually integratedly juxtaposed concace lenses 3002 and 3003, and there are two surfaces 3004, 3005 which are vertical surfaces of the front and the rear sides respectively, and a bottom surface 3006 of the light grating 3001 having multiple focuses is a plane surface.
2. Referring to Figs. 31 and 31A, in the drawings, a light grating 3101 having multiple focuses is composed of three mutually integratedly juxtaposed concave lenses 3102, 3103 and 3104, and there are two surfaces, 3105 and 3106 which are vertical surfaces of the front and the rear sides respectively, and a bottom surface 3107 of the light grating 3101 having multiple focuses is a plane surface.
3. Referring to Figs. 32 and 32A, in the drawings, a light grating 3201 having multiple focuses is composed of four mutually integratedly juxtaposed concave lenses 3202, 3203, 3204 and 3205, and there are two surfaces 3206, 3207 which are vertical surfaces of the front and the rear sides respectively, and a bottom surface 3208 of the light grating 3201 having multiple focuses is a plane surface.
4. Referring to Figs. 33 and 33A, in the drawings, a light grating 3301 having multiple focuses is composed of two arciform (one convex and one convex concave) mutually integratedly juxtaposed concave lenses 3302 and 3303, and there are two surfaces 3304, 3305 which are vertical surfaces of the front and the rear sides respectively, and a bottom surface 3307 of the light grating 3301 having multiple focuses is a plane surface.
5. Referring to Figs. 34 and 34A, in the drawings, a light grating 3401 having multiple focuses is composed of three arciform (one convex lenses 3402 and two concave lenses 3403, 3404) mutually integratedly juxtaposed, and there are two surfaces 3405, 3406 which are vertical surfaces of the front and the rear sides respectively, and a bottom surface 3407 of the light grating 3401 having multiple focuses is a plane surface.
6. Referring to Figs. 35 and 35A, in the drawings, a light grating 3501 having multiple focuses is composed of four arciform (two convex lenses 3502, 3505 and two concave lenses 3503, 3504) mutually integratedly juxtaposed, and there are two surfaces 3506, 3507 which are vertical surfaces of the front and the rear sides respectively, and a bottom surface 3508 of the light grating 3501 having multiple focuses is a plane surface.

By virtue that there are many kinds of light grating structures composed of mutually integratedly juxtaposed convex lenses, here we summarily list the above six kinds of composed structures, generally speaking, a convex lens grating having two or more focuses and composed of two or more mutually integratedly juxtaposed arciform (concave or convex) lenses in strip, cloud, or annular shapes all fall in the range of the light gratings with multiple focuses formed from the transparent boards of the present invention.

According to the above list many kinds of embodiments, a light distribution board of the present invention can be used on a light outputting surface of a conventional lamp in lieu of a conventional lamp shade, thus a lamp set with a light distribution board of the present invention can be formed.

In conclusion, by specifically designing on light gratings, a light distribution board of the present invention can get the expected effects thereof. Having thus described my invention, what I claim as new and desire to be secured by Letters Patent of the United States is:

## Claims

1. A light distribution board having a plurality of light gratings each with multiple focuses, said light distribution board is used on a light outputting surface of a lamp to control refraction angular directions of light beams of said lamp, so that said light beams irradiate a district to be illuminated to get an effect of uniformly distributing, said lamp includes an obscured lamp shade, at least a reflective surface and at least a light source; said light distribution board having a plurality of light gratings each with multiple focuses includes at least a transparent board formed on at least one side thereof a plurality of light gratings having multiple focuses, said light distribution board is **characterized in that:**
each of said light gratings having multiple focuses is composed of two or more mutually integratedly juxtaposed arciform (concave or convex) lenses to form a convex lens grating having at least two focuses, curvature and inclination angle of each of said arciform (concave or convex) lenses forming each of said light gratings having multiple focuses are changed in pursuance of angles of refraction of incident light beams through surfaces of said convex lenses.

2. The light distribution board having a plurality of light gratings each with multiple focuses as in claim 1, wherein: said transparent board is provided on its top surface with a plurality of light gratings each having multiple focuses, said light gratings with multiple focuses are strip like light gratings; said top surface is a light receiving surface of said lamp, a bottom surface of said transparent board is a plane surface and is an illuminating surface of said lamp.

3. The light distribution board having a plurality of light gratings each with multiple focuses as in claim 1, wherein: said transparent board is provided on its top surface with a plurality of light gratings each having multiple focuses, said light gratings with multiple focuses are annular light gratings; said top surface is a light receiving surface of said lamp, a bottom surface of said transparent board is a plane surface and is an illuminating surface of said lamp.

4. The light distribution board having a plurality of light gratings each with multiple focuses as in claim 1, wherein: said transparent board is provided on its top surface with a plurality of light gratings each having multiple focuses, said light gratings with multiple focuses are cloud shaped light gratings; said top surface is a light receiving surface of said lamp, a bottom surface of said transparent board is a plane surface and is an illuminating surface of said lamp.

5. The light distribution board having a plurality of light gratings each with multiple focuses as in claim 1, wherein: said transparent board is provided on its top surface with a plurality of light gratings each having multiple focuses, said light gratings with multiple focuses are non- concentric annular light gratings; said top surface is a light receiving surface of said lamp, a bottom surface of said transparent board is a plane surface and is an illuminating surface of said lamp.

6. The light distribution board having a plurality of light gratings each with multiple focuses as in claim 1, wherein: said transparent board is provided on its top surface with a plurality of light gratings each having multiple focuses, said light gratings with multiple focuses are composed of a plurality of non-concentric annular light gratings and a plurality of partially annular light gratings; said top surface is a light receiving surface of said lamp, a bottom surface of said transparent board is a plane surface and is an illuminating surface of said lamp.

7. The light distribution board having a plurality of light gratings each with multiple focuses as in claim 1, wherein: said transparent board is provided on its top surface with a plurality of light gratings each having multiple focuses, said light gratings with multiple focuses are composed of a plurality of non-concentric and partially annular light gratings; said top surface is a light receiving surface of said lamp, a bottom surface of said transparent board is a plane surface and is an illuminating surface of said lamp.

8. The light distribution board having a plurality of light gratings each with multiple focuses as in claim 1, wherein: said transparent board is provided on its top surface with a plurality of light gratings each having multiple focuses, said light gratings with multiple focuses are annular light gratings arranged in steps; said top surface is a light receiving surface of said lamp, a bottom surface of said transparent board is a plane surface and is an illuminating surface of said lamp.

9. The light distribution board having a plurality of light gratings each with multiple focuses as in claim 1, wherein: said transparent board is provided on its top surface with a plurality of light gratings each having multiple focuses, said light gratings with multiple focuses are annular light gratings arranged in steps; said top surface is a light receiving surface of said lamp, a bottom surface of said transparent board is an arciform surface and is an illuminating surface of said lamp.

10. The light distribution board having a plurality of light gratings each with multiple focuses as in claim 1, wherein: said transparent board is provided on its top surface with a plurality of light gratings each having multiple focuses, said light gratings with multiple focuses are strip like light gratings; said top surface is a light receiving surface of said lamp, a bottom surface of said transparent board is formed thereon a plurality of normal convex lenses and is an illuminating surface of said lamp.

11. The light distribution board having a plurality of light gratings each with multiple focuses as in claim 1, wherein: said transparent board is provided on its top surface with a plurality of light gratings each having multiple focuses, said light gratings with multiple focuses are annular light gratings; said top surface is a light receiving surface of said lamp, a bottom surface of said transparent board is formed thereon a plurality of normal convex lenses and is an illuminating surface of said lamp.

12. The light distribution board having a plurality of light gratings each with multiple focuses as in claim 1, wherein: said transparent board is provided on its top surface with a plurality of light gratings each having multiple focuses, said light gratings with multiple focuses are granular light gratings arranged in lines; said top surface is a light receiving surface of said lamp, a bottom surface of said transparent board is a plane surface and is an illuminating surface of said lamp.

13. The light distribution board having a plurality of light gratings each with multiple focuses as in claim 1, wherein: said transparent board is provided on its top surface with a plurality of light gratings each having multiple focuses, said light gratings with multiple focuses are granular light gratings mutually overlapping and arranged in lines; said top surface is a light receiving surface of said lamp, a bottom surface of said transparent board is a plane surface and is an illuminating surface of said lamp.

14. The light distribution board having a plurality of light gratings each with multiple focuses as in claim 1, wherein: said transparent board is provided on its top surface with a plurality of light gratings each having multiple focuses, said light gratings with multiple focuses are granular light gratings arranged in annular shapes; said top surface is a light receiving surface of said lamp, a bottom surface of said transparent board is a plane surface and is an illuminating surface of said lamp.

15. The light distribution board having a plurality of light gratings each with multiple focuses as in claim 1, wherein: said transparent board is provided on its top surface with a plurality of light gratings each having multiple focuses, said light gratings with multiple focuses are granular light gratings mutually overlapping and being arranged in annular shapes; said top surface is a light receiving surface of said lamp, a bottom surface of said transparent board is a plane surface and is an illuminating surface of said lamp.

16. The light distribution board having a plurality of light gratings each with multiple focuses as in claim 1, wherein: said transparent board is provided on its top surface with a plurality of light gratings each having multiple focuses, said light gratings with multiple focuses are granular light gratings arranged in lines; said top surface is a light receiving surface of said lamp, a bottom surface of said transparent board is formed thereon a plurality of normal convex lenses and is an illuminating surface of said lamp.

17. The light distribution board having a plurality of light gratings each with multiple focuses as in claim 1, wherein: said transparent board is provided on its top surface with a plurality of light gratings each having multiple focuses, said light gratings with multiple focuses are granular light gratings arranged in annular shapes; said top surface is a light receiving surface of said lamp, a bottom surface of said transparent board is formed thereon a plurality of normal convex lenses and is an illuminating surface of said lamp.

18. The light distribution board having a plurality of light gratings each with multiple focuses as in claim 1, wherein: shape of said transparent board is chosen from rectangular, circle, elliptical and strange shapes.

19. The light distribution board having a plurality of light gratings each with multiple focuses as in claim 1, wherein: material for said transparent board is chosen from transparent plastics and transparent glass.

20. The light distribution board having a plurality of light gratings each with multiple focuses as in claim 1, wherein: amount of said at least a transparent board is two which mutually overlap; and of which an upper transparent board is provided on its top surface with a plurality of light gratings each having multiple focuses, said top surface is a light receiving surface of said lamp, and a bottom surface of said upper transparent board is a plane surface; and of which a lower transparent board is provided on its top surface with a plurality of light gratings each having multiple focuses, said top surface is a light receiving surface of said lamp, and a bottom surface of said lower transparent board is a plane surface or is formed thereon a plurality of normal convex lenses and is an illuminating surface of said lamp.

21. The light distribution board having a plurality of light gratings each with multiple focuses as in claim 1, wherein said two or more mutually integratedly juxtaposed arciform lenses of each of said light gratings having multiple focuses are convex lenses.

22. The light distribution board having a plurality of light gratings each with multiple focuses as in claim 1, wherein said two or more mutually integratedly juxtaposed arciform lenses of each of said light gratings having multiple focuses are concave lenses.

23. The light distribution board having a plurality of light gratings each with multiple focuses as in claim 1, wherein said two or more mutually integratedly juxtaposed arciform lenses of each of said light gratings having multiple focuses include partly convex lenses and partly concave lenses.
